# EUROPÄISCHE PATENTSCHRIFT

(11) **EP 0 885 758 B1**
(45) Veröffentlichungstag und Bekanntmachung des Hinweises auf die Patenterteilung: **23.07.2003**
(21) Anmeldenummer: 98108696.0
(22) Anmeldetag: 13.05.1998
(51) Int. Cl.: B60H 1/18, F02D 9/00, F02D 9/04

(54) **Verfahren zum Betrieb eines Wärmetauschers im Abgasstrom einer Brennkraftmaschine für Kraftfahrzeuge**
Method of operating of an exhaust heat exchanger in an internal-combustion engine for a motor vehicle
Méthode d'opération d'un échangeur de chaleur des gaz d'échappement d'un moteur à combustion interne de véhicules automobiles

(30) Priorität: 18.06.1997 DE 19725674
(43) Veröffentlichungstag der Anmeldung: 23.12.1998
(73) Patentinhaber: Bayerische Motoren Werke Aktiengesellschaft, 80788 München (DE)
(72) Erfinder: Köhl, Werner, 2103 Langenzersdorf (AT)

(56) Entgegenhaltungen:
- DE-A- 19 500 473
- DE-A- 19 500 474
- DE-A- 19 500 476
- GB-A- 2 301 177

## Beschreibung

Die Erfindung betrifft ein Verfahren zum Betrieb eines abgasbeheizten Wärmetauschers im Abgasstrom einer Brennkraftmaschine nach dem Oberbegriff des Patentanspruchs 1.

Ein derartiges Verfahren ist beispielsweise aus der *GB-A-2 301 177 bekannt. Ein ähnliches Verfahren ist auch aus der* DE 195 00 473 A1 bekannt. Bei *den bekannten* Verfahren wird *insbesondere* durch den Rückstau in der Abgasleitung am Abgasauslaß der Brennkraftmaschine die Energie des Gegendrucks des Abgasstroms in Wärme umgesetzt. Durch den erhöhten Abgas-Gegendruck, insbesondere in einer Warmlaufphase, wird die Brennkraftmaschine zusätzlich belastet, wobei die entstehende Wärme teilweise über einen Abgas-Wärmetauscher zur schnelleren Aufheizung des Kühlmittels rückgewonnen werden kann. Dies führt einerseits dazu, daß die Abgastemperatur in einem Temperaturbereich eingestellt werden kann, in dem nachgeschaltete Nachbehandlungssysteme optimal arbeiten, andererseits führt die raschere Aufheizung des Kühlmittels zur Verringerung der Abgasemissionen. Durch den höheren Abgasgegendruck kommt es zudem zur Erhöhung interner Abgasrückführraten.

Das aus der DE 195 00 473 A1 bekannte Verfahren setzt sich aus zwei Phasen zusammen: Aus einer ersten Phase in Form einer Startphase und aus einer zweiten Phase in Form einer Normalphase. In der ersten Phase während eines nicht näher definierten Warmlaufbetriebs werden vorzugsweise zwei Ventile, ein erstes Ventil stromaufwärts und ein zweites Ventil stromabwärts vom Wärmetauscher nach einem festgelegten Zyklus in der Weise angesteuert, daß zunächst das stromabwärts angeordnete Ventil geschlossen und das stromaufwärts angeordnete Ventil geöffnet wird, um den Wärmetauscher mit heißem, mit hoher Geschwindigkeit aus dem Staubereich einströmenden Abgas zu füllen, und daß anschließend das stromaufwärts angeordnete Ventil so zeitig wieder geschlossen wird, daß ein Überdruck mit gleichzeitig erhöhter Temperatur und Dichte im Wärmetauscher entsteht. Nach Ablauf einer vorbestimmten Verweildauer wird das stromabwärts angeordnete Ventil zunächst geöffnet, um den Wärmetauscher zu entleeren und dabei einen Unterdruck zu erzeugen, und anschließend wieder geschlossen. Hierauf wiederholt sich der Zyklus. Bei dem aus der DE 195 00 473 A1 bekannten Verfahren kann der Wärmetauscher sowohl in der Hauptleitung als auch in einer Bypaßleitung der Abgasleitung angeordnet sein. Während in der beschriebenen ersten Phase ein maximal mögliches Aufheizen des Abgases vorgenommen wird, wird in der zweiten Phase als Normalphase das weitere Aufheizen des Abgases schlicht dadurch beendet, daß die Ventile geöffnet werden, um ein möglichst ungehindertes Durchströmen zumindest der Abgas-Hauptleitung zu ermöglichen.

Dieses bekannte Verfahren stellt eine sehr einfache Steuerung zum beschleunigten Aufheizung des Abgases dar, bei der sämtliche übrigen Funktionen und Betriebszustände der Brennkraftmaschine, wie z. B. Beschleunigungsvorgänge oder komfort- und emissionsoptimale Funktionen, unberücksichtigt bleiben.

Es ist daher Aufgabe der Erfindung, ein Verfahren eingangs genannter Art derart zu verbessern, daß auch andere Funktionsparameter einer Brennkraftmaschinensteuerung, insbesondere im Hinblick auf Komfort- oder Emissionsvorteile, berücksichtigt werden.

Diese Aufgabe wird durch die kennzeichnenden Merkmale des Patentanspruchs 1 gelöst.

Die Unteransprüche sind vorteilhafte Weiterbildungen der Erfindung.

Im wesentlichen wird erfindungsgemäß der Warmlaufbetrieb in zwei Phasen aufgeteilt, wobei in der ersten Phase ein höherer Gegendruck als in der zweiten Phase erzeugt wird. Hierzu sind vorzugsweise ein erstes Ventil in der Hauptleitung und ein zweites Ventil in der Bypaßleitung stromabwärts vom Wärmetauscher angeordnet, so daß in der ersten Phase, insbesondere im unteren Temperaturbereich und/oder bei niedriger Last der Brennkraftmaschine, für einen maximal möglichen Gegendruck beide Ventile geschlossen werden können und in der zweiten Phase das erste Ventil geschlossen, aber das zweite Ventil geöffnet ist. In der zweiten Phase ist demnach der Abgasstrom weiter gehindert, die Hauptleitung zu durchströmen. Der Abgasstrom ist also gezwungen, die engere Bypaßleitung mit dem Wärmetauscher zu durchströmen. Hierdurch entsteht zwar ein geringerer Gegendruck als in der ersten Phase, ein ungehindertes Durchströmen der Hauptleitung wird jedoch noch verhindert. Die Normalphase, bei der der Abgasstrom die Hauptleitung ungehindert durchströmen kann, wird als dritte Phase definiert. Vorzugsweise ist in der dritten Phase jedoch das zweite Ventil in der Bypaßleitung geschlossen.

Das zweite Ventil kann in der ersten Phase beispielsweise federbelastet geschlossen sein, wobei die Federkennung so gewählt ist, daß der Abgasstrom das Ventil leicht aufdrücken kann. Somit ist die Versorgung des Wärmetauschers mit heißem Abgas gewährleistet.

Das erste und zweite Ventil sind vorzugsweise Drosselklappen.

Die zweite Phase wird insbesondere bei mittleren Kühlmitteltemperaturen (z. B. zwischen 70° und 85°C) im unteren Lastbereich der Brennkraftmaschine ausgewählt.

Ist die Kühlmitteltemperatur nahe der Betriebstemperatur, d. h. nahe der Thermostatöffnungstemperatur, soll grundsätzlich das gesamte Abgas ungehindert die Hauptleitung durchströmen. Daher wird insbesondere bei einer Kühlmitteltemperatur, die eine obere Temperaturschwelle überschritten hat, die dritte Phase eingeleitet bzw. die Abgasheizung ausgeschaltet.

In der Zeichnung ist ein Ausführungsbeispiel der Erfindung dargestellt. Es zeigen:
- Fig. 1 bis 3: die Stellungen der Ventile in den drei Phasen und
- Fig. 4: eine mögliche Steuerlogik der erfindungsgemäßen Abgasheizung.

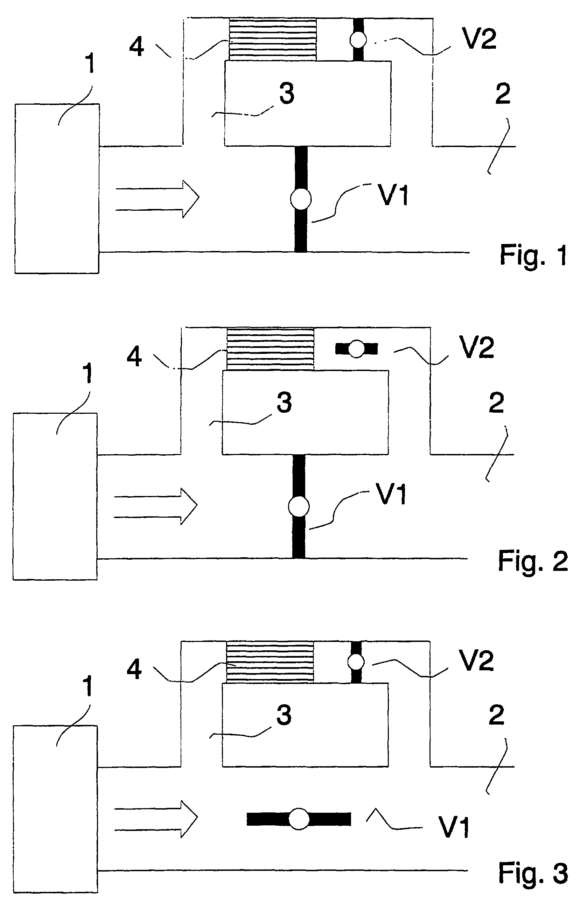

In Fig. 1 ist am Abgasauslaß einer Brennkraftmaschine 1 eine Abgas-Hauptleitung 2 angeschlossen. Von der Hauptleitung 2 zweigt eine Bypaßleitung 3 ab, in der ein abgasbeheizter Wärmetauscher 4 angeordnet ist. In der Hauptleitung 2 ist bezogen auf den Wärmetauscher 4 stromaufwärts ein erstes Ventil V1 in Form einer Drosselklappe angeordnet. Bezogen auf den Wärmetauscher 4 ist ein zweites Ventil V2 stromabwärts in der Bypaßleitung 3 angebracht. In Fig. 1 sind beide Ventile V1 und V2 geschlossen. Dies entspricht der ersten Phase, bei der der höchste Gegendruck am Abgasauslaß der Brennkraftmaschine 1 erzeugt wird.

In den Fig. 2 und 3 sind gleiche Teile mit gleichen Bezugszeichen versehen. In Fig. 2 ist die Stellung der Ventile V1 und V2 in der zweiten Phase dargestellt, in der das erste Ventil V1 geschlossen und das zweite Ventil V2 geöffnet ist.

In Fig. 3 ist die Normalphase bzw. dritte Phase dargestellt, bei der die Abgasheizung ausgeschaltet ist, indem insbesondere das erste Ventil V1 geöffnet ist. Vorzugsweise ist das zweite Ventil V2 geschlossen. In der dritten Phase kann der Abgasstrom die Hauptleitung 2 ungehindert durchströmen.

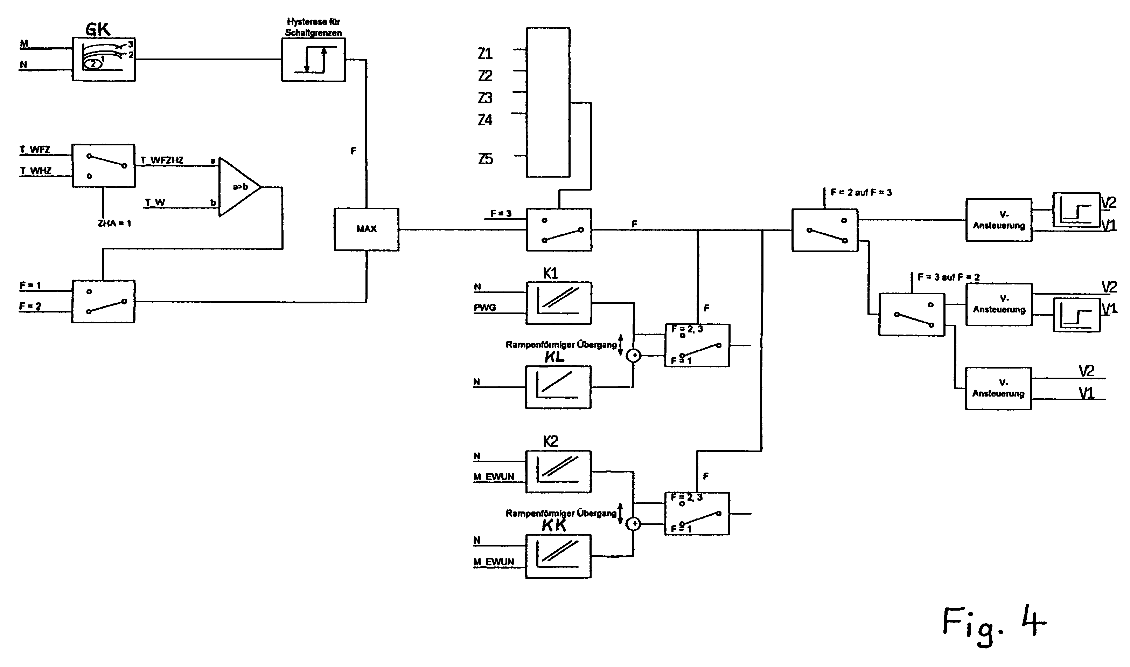

In Fig. 4 ist die Logik der Ventilansteuerung in Abhängigkeit von den ausgewählten Phasen F dargestellt. Zunächst findet eine betriebspunktabhängige Vorauswahl einer Phase statt, indem in Abhängigkeit von dem Drehmoment M und der Drehzahl N der Brennkraftmaschine über ein Grundkennfeld GK definiert wird, an welchem Betriebspunkt der Brennkraftmaschine welche Phase der drei möglichen Phasen F = 1 bis F = 3 ausgewählt werden soll. Eine nachfolgende Hysterese für Umschaltgrenzen zwischen den Phasen F soll ein ständiges Hin- und Herschalten der Ventile verhindern.

Anschließend findet eine kühlmitteltemperaturabhängige Vorauswahl einer Phase statt. Hierzu werden beispielsweise eine Fahrzyklus-Temperaturschwelle T_WFZ (z. B. 70°C) und eine Abgasheizung-Temperaturschwelle T_WHZ (z. B. 75°C) definiert. Als Umschalt-Temperaturschwelle T_WFZHZ, bei deren Überschreitung von der ersten Phase F = 1 auf die zweite Phase F = 2 umgeschaltet wird, wird grundsätzlich die Fahrzyklus-Temperaturschwelle T_WFZ vorgegeben. Wird jedoch die Fahrzeugheizung eingeschaltet (ZHA = 1), gilt die komfortoptimale Abgasheizung-Temperaturschwelle T_WHZ als Umschalt-Temperaturschwelle T_WFZHZ. Ist die Umschalt-Temperaturschwelle T_WFZHZ größer als die momentane Kühlmitteltemperatur T_W (a > b), wird die erste Phase F = 1 vorausgewählt, um das Abgas möglichst stark aufzuheizen.

Ist durch die wassertemperaturabhängige Vorauswahl beispielsweise die zweite Phase F = 2 und durch die betriebspunktabhängige Vorauswahl beispielsweise die erste Phase F = 1 vorgegeben, wird durch die Maximum-Auswahleinheit MAX die in ihrer Bezifferung höchste Phase, im vorliegenden Beispiel die zweite Phase F = 2, ausgegeben und grundsätzlich auch eingestellt. Liegt jedoch zumindest ein Zustand der vorgegebenen Einzelbetriebszustände Z1 bis Z5 vor, wird ausnahmsweise vorrangig die dritte Phase F = 3 eingestellt. Der Zustand Z1 kann beispielsweise erfüllt sein, wenn die momentane Kühlmitteltemperatur T_W die Thermostatöffnungstemperatur (z. B. 85°C) überschreitet. Der Zustand Z2 kann beispielsweise ein schnelles Gasgeben und der Zustand Z3 ein schnelles Loslassen des Gaspedals sein. Der Zustand Z4 ist beispielsweise der Start der Brennkraftmaschine. Der Zustand Z5 ist beispielsweise erfüllt, wenn oberhalb einer definierten Fahrgeschwindigkeitsschwelle Schubbetrieb auftritt, so daß eine Gefahr des Blockierens der Antriebsräder durch erhöhtes Motorschleppmoment gegeben ist. Liegt zumindest ein Zustand dieser Einzelbetriebszustände Z1 bis Z5 vor, soll die Abgasdrosselung abgeschaltet werden, indem zumindest das erste Ventil V1 geöffnet wird (dritte Phase, F = 3).

Die beiden Ventile V1 und V2 in Form von Drosselklappen werden vorzugsweise über eine digitale Schwarz-Weiß-Steuerung (auf/zu) und über Unterdruckdosen angesteuert. Aus Sicherheitsgründen soll ohne Anliegen von Unterdruck das erste Ventil V1 offen und das zweite Ventil V2 geschlossen sein. Beim Übergang von der zweiten Phase F = 2 auf die dritte Phase F = 3 soll zur Vermeidung von Druckspitzen im Abgastrakt die Ansteuerung der beiden Unterdruckdosen (V-Ansteuerung) zeitlich versetzt erfolgen: Zuerst wird das erste Ventil V1 geöffnet und anschließend nach einer Zeitverzögerung das zweite Ventil V2 geschlossen. Beim Zurückschalten von der dritten Phase F = 3 auf die zweite Phase F = 2, soll zuerst das zweite Ventil V2 geöffnet und anschließend nach einer Zeitverzögerung das erste Ventil V1 geschlossen werden. Bei Übergängen von der ersten Phase F = 1 auf die zweite Phase F = 2 und umgekehrt sowie bei Übergängen von der ersten Phase F = 1 auf die dritte Phase F = 3 und umgekehrt müssen keine zeitlich versetzten Schaltungen der Ventile V1 und V2 vorgesehen werden.

Vorteilhafterweise sind die für Brennkraftmaschinen üblicherweise verwendeten Kennfelder K1 und K2 zur Steuerung des Luft-/Kraftstoffverhältnisses abhängig von der eingestellten Phase F modifizierbar. Das Kennfeld K1 ist beispielsweise das von der Drehzahl N und dem Pedalwinkelgeber PWG abhängige Fahrverhaltenkennfeld, durch das der Drehmomentenwunsch zur Steuerung der Kraftstoffmenge vorgegeben wird. Das Fahrverhaltenkennfeld K1 wird beispielsweise durch eine von der Drehzahl N abhängige Korrekturkennlinie KL modifiziert. Im dargestellten Beispiel soll die Korrekturkennlinie KL des Fahrverhaltenkennfelds K1 einen Drehmomentensprung durch Zu- bzw. Wegschalten der Abgasdrosselung bei konstanter Pedalwinkelstellung verhindern. Hierbei wird die Korrekturmenge rampenförmig aufgeschaltet, wobei die Länge der Rampe in Abhängigkeit von der ausgewählten Phase F einstellbar ist.

Das Kennfeld K2 ist beispielsweise das Grundkennfeld für eine Abgasrückführrate in Abhängigkeit von der Drehzahl N der Brennkraftmaschine und dem Momentenwunsch M_EWUN des Fahrers. Dieses Grundkennfeld K2 wird über ein Korrekturkennfeld KK modifiziert, um den geänderten thermodynamischen Bedingungen bei erhöhtem Abgasgegendruck Rechnung zu tragen. Auch hier erfolgt die Aufschaltung der Korrektur-Solluftmenge rampenförmig in Abhängigkeit von der ausgewählten Phase F. Über die modifizierten Kennfelder K1 und K2 soll grundsätzlich nach der Maximumauswahl aus der kühlmitteltemperaturabhängigen und der betriebspunktabhängigen Vorauswahl einer Phase die Möglichkeit bestehen, auf die geänderten Abgasgegendrücke mit modifizierten Wunscheinspritzmengen und modifizierten Abgasrückführraten zu reagieren.

Durch das dargestellte Ausführungsbeispiel wird deutlich, daß im Gegensatz zur einfachen Steuerung nach dem Stand der Technik durch das erfindungsgemäße Verfahren folgende weitere Möglichkeiten gegeben sind:
1. Hysterese für die Umschaltgrenzen der Abgasdrosselung
2. Wahlmöglichkeit zwischen komfort- und emissionsoptimaler Funktion der Abgasdrosselung
3. Abhängigkeit der Drosselung von Beschleunigungsvorgängen (Einspritzmengengradienten)
4. Abschaltung der Drosselung in fahrdynamisch schwierigen Situationen
5. Verhinderung eines Drehmomentensprungs beim Zu- bzw. Wegschalten der Drosselung
6. Korrektur der Abgasrückführraten bei eingeschalteter Abgasdrosselung
7. Zeitlich differenzierte Ansteuerung der Abgasklappen zur Vermeidung von Druckspitzen im Abgastrakt
8. Miteinbeziehung von Motorfunktionsparametern in die Steuerung (Komfort- und Emissionsvorteile)
9. Integration der Ventilansteuerung in die Steuerung der Brennkraftmaschine

## Patentansprüche

1. Verfahren zum Betrieb eines Wärmetauschers im Abgasstrom einer Brennkraftmaschine für Kraftfahrzeuge, bei dem der Abgasstrom in eine Hauptleitung (2) und in eine Bypaßleitung (3) aufteilbar ist, bei dem der Wärmetauscher (4) in der Bypaßleitung (3) angeordnet ist und bei dem in einem Warmlaufbetrieb ein Rückstau in der Hauptleitung (2) erzeugbar ist, der einen Gegendruck am Abgasauslaß der Brennkraftmaschine (1) verursacht, wobei der Warmlaufbetrieb in zwei Phasen aufgeteilt wird, wobei in der ersten Phase (F=1) ein höherer Gegendruck als in der zweiten Phase (F=2) erzeugt wird,
**dadurch gekennzeichnet, daß** ein erstes Ventil (V1) in der Hauptleitung (2) zwischen den Bypaßleitungsanschlüssen und ein zweites Ventil (V2) in der Bypaßleitung (3) stromabwärts vom Wärmetauscher (4) angeordnet sind und daß in der ersten Phase (F=1) beide Ventile (V1, V2) geschlossen sind und in der zweiten Phase (F=2) das erste Ventil (V1) geschlossen, aber das zweite Ventil (V2) geöffnet ist.

2. Verfahren nach Patentanspruch 1, **dadurch gekennzeichnet, daß** eine dritte Phase (F=3) als Normalphase definiert ist, bei der vorzugsweise das erste Ventil (V1) geöffnet, aber das zweite Ventil (V2) geschlossen ist.

3. Verfahren nach einem der Patentansprüche 1 bis 2, **dadurch gekennzeichnet, daß** eine Phase (z.B. F=2) in Abhängigkeit von der Kühlmitteltemperatur (T_W) vorausgewählt wird und unabhängig davon eine Phase (z.B. F=1) in Abhängigkeit vom drehmomentbezogenen (M) und/oder drehzahlbezogenen (N) Betriebspunkt der Brennkraftmaschine vorausgewählt wird und daß anschließend bei Ungleichheit der vorausgewählten Phasen die in ihrer Bezifferung höchste Phase (hier: F=2) eingestellt wird.

4. Verfahren nach Patentanspruch 2 oder 3, **dadurch gekennzeichnet, daß** abhängig von vorgegebenen Einzelbetriebszuständen (Z1 bis Z5) vorrangig die dritte Phase (F=3) eingestellt wird.

5. Verfahren nach einem der Patentansprüche 1 bis 4, **dadurch gekennzeichnet, daß** die Ventile (V1, V2) zeitlich versetzt angesteuert werden, wenn die Stellungen beider Ventile (V1, V2) beim Übergang von einer Phase (z.B. F=2) in eine andere Phase (z.B. F=3) geändert werden müssen.

6. Verfahren nach einem der Patentansprüche 1 bis 5, **dadurch gekennzeichnet, daß** die für Brennkraftmaschinen üblicherweise verwendeten Kennfelder (K1, K2) zur Steuerung des Luft-/ Kraftstoffverhältnisses abhängig von der eingestellten Phase modifizierbar sind.

## Claims

1. Method for operating a heat exchanger in the exhaust gas flow of an internal-combustion engine for vehicles, in which the exhaust gas flow can be divided into a main line (2) and a bypass line (3), in which the heat exchanger (4) is arranged in the bypass line (3) and in which a back-pressure can be generated in the main line (2) in a warm-up operation, the back-pressure causing a counter-pressure at the exhaust gas outlet of the internal-combustion engine (1), the warm-up operation being divided into two phases, wherein a higher counter-pressure is generated in the first phase (F = 1) than in the second phase (F = 2), **characterised in that** the first valve (V1) is arranged in the main line (2) between the bypass line connections and a second valve (V2) is arranged in the bypass line (3) downstream from the heat exchanger (4) and **in that** in the first phase (F = 1) both valves are closed (V1, V2) and in the second phase (F = 2) the first valve (V1) is closed but the second valve (V2) is open.

2. Method according to claim 1, **characterised in that** a third phase (F = 3) is defined as the normal phase, in which preferably the first valve (V1) is open but the second valve (V2) is closed.

3. Method according to either of claims 1 or 2, **characterised in that** the first phase (for example F = 2) is preselected as a function of the coolant temperature (T_W) and, independently thereof, a phase (for example F = 1) is preselected as a function of the torque-related (M) and/or rotational speed-related (N) operational point of the internal-combustion engine and **in that** in the event of inequality of the preselected phases the phase which is highest in its numbering (here: F = 2) is adjusted.

4. Method according to claim 2 or 3, **characterised in that**, depending on the preset individual operating states (Z1 to Z5), the third phase (F = 3) is adjusted as a priority.

5. Method according to any one of claims 1 to 4, **characterised in that** the valves (V1, V2) are controlled in a time-staggered manner, when the positions of the two valves (V1, V2) have to be changed during transition from a phase (for example F = 2) into another phase (for example F = 3).

6. Method according to any of claims 1 to 5, **characterised in that** the characteristic maps (K1, K2) generally used for internal-combustion engines to control the air/fuel ratio can be modified as a function of the adjusted phase.

## Revendications

1. Procédé pour faire fonctionner un échangeur thermique dans le flux de gaz d'échappement d'un moteur à combustion interne pour des véhicules automobiles, selon lequel le flux de gaz d'échappement peut être réparti dans une conduite principale (2) et dans une conduite de dérivation (3), l'échangeur thermique (4) est placé dans la conduite de dérivation (3) et en cas de fonctionnement à chaud on peut produire dans la conduite principale (2) un reflux qui provoque une contre-pression sur la sortie de gaz d'échappement du moteur à combustion interne (1), le fonctionnement à chaud étant réparti en deux phases avec une contre-pression produite dans la première phase (F = 1) plus élevée que dans la deuxième phase (F = 2),
**caractérisé en ce qu'**
une première vanne (V1) est placée dans la conduite principale (2) entre les raccordements de conduite de dérivation et une deuxième vanne (V2) est placée dans la conduite de dérivation (3) en aval de l'échangeur thermique (4), dans la première phase (F = 1) les deux vannes (V1, V2) sont fermées et dans la deuxième phase (F = 2) la première vanne (V1) est fermée mais la deuxième vanne (V2) est ouverte.

2. Procédé selon la revendication 1,
**caractérisé en ce qu'**
une troisième phase (F = 3) est définie en tant que phase normale, pour laquelle la première vanne (V1) est de préférence ouverte mais la deuxième vanne (V2) est fermée.

3. Procédé selon l'une des revendications 1 à 2,
**caractérisé en ce qu'**
une phase (par exemple F = 2) est présélectionnée en fonction de la température de l'agent de refroidissement (T_W) et indépendamment de cela une phase (par exemple F = 1) est présélectionnée en fonction du point de fonctionnement - sur la base du couple de rotation (M) ou sur la base du régime (N) - du moteur à combustion interne et ensuite la phase la plus élevée quant à sa numération (ici F = 2) est établie quand les phases présélectionnées sont inégales.

4. Procédé selon la revendication 2 ou 3,
**caractérisé en ce que**
l'on établit en priorité la troisième phase (F = 3) en fonction d'états de fonctionnements particuliers prédéterminés (Z1 à Z5).

5. Procédé selon l'une des revendications 1 à 4,
**caractérisé en ce que**
les vannes (V1, V2) sont commandées de façon décalée dans le temps lorsque les positions des deux vannes (V1, V2) doivent être modifiées lors du passage d'une des phases (par exemple F = 2) à une autre phase (par exemple F = 3).

6. Procédé selon l'une des revendications 1 à 5,
**caractérisé en ce que**
les diagrammes caractéristiques (K1, K2) habituellement utilisés pour des moteurs à combustion interne et destinés à commander le rapport de l'air et du carburant peuvent être modifiés en fonction de la phase établie.
